# EUROPEAN PATENT SPECIFICATION

(11) **EP 2 587 503 B1**
(45) Date of publication and mention of the grant of the patent: **05.03.2014**
(21) Application number: 10739960.2
(22) Date of filing: 28.06.2010
(51) Int. Cl.: H01G 9/10, H01G 4/224, H01G 2/04

(54) **POWER CAPACITOR FOR LOW VOLTAGE, PROVIDED WITH CAPACITOR ELEMENTS, A CAPACITOR ELEMENT AND A METHOD FOR PRODUCING SAID CAPACITOR ELEMENT**
LEISTUNGSKONDENSATOR FÜR NIEDRIGSPANNUNG MIT KONDENSATORELEMENT, EIN KONDENSATORELEMENT UND VERFAHREN ZUR HERSTELLUNG DES BESAGTEN KONDENSATORELEMENTS
CONDENSATEUR DE PUISSANCE POUR BASSE TENSION, POURVU D'ÉLÉMENTS CONDENSATEURS, ÉLÉMENT CONDENSATEUR, ET PROCÉDÉ POUR LA FABRICATION DUDIT ÉLÉMENT CONDENSATEUR

(43) Date of publication of application: 01.05.2013
(60) Divisional application: 13187226.9
(73) Proprietor: International Capacitors S. A., 08130 Santa Perpetua de Mogoda (ES)
(72) Inventor: RUBIO NOTARIO, David, E-08130 Santa Perpetua de Mogoda (ES)
(74) Representative: Oficina Ponti, SLP
(86) International application number: PCT/ES2010/070436
(87) International publication number: WO 2012/001181

(56) References cited:
- EP-A1- 0 611 179
- EP-A2- 0 071 806
- WO-A1-2005/041226
- GB-A- 1 489 638
- US-A1- 2007 086 146
- US-A1- 2007 195 485

## Description

The present invention refers to a power capacitor for low voltage provided with capacitor elements, especially intended to compensate reactive power.

### BACKGROUND OF THE INVENTION

Currently, the prismatic power capacitors for low voltage are manufactured grouping a number of capacitor elements and electrically connecting them by electric cables with joining sleeves.

In the practice this kind of assembly is very complicated and annoying because the group of capacitor elements must be assembled with a lot of hanging cables and with tangled shapes, which makes the assembly even more difficult, and therefore the wiring is never aligned nor placed correctly inside a metallic box where the mounted assembly is housed.

Therefore, a very uneven capacitor which can be damaged and leaving possible active points that can lead to leaks, short-circuits, and bad dielectric insulations between the active part and the metallic box.

Furthermore, this kind of assembly involves an important labour, and the corresponding cost of the used materials. On the other hand, as it is a manual process frequent human errors can be produced, with the consequent reprocessing and production costs.

Patent US 2007/0195485 A1 describes a circuit arrangement designed as a module with a chain of connected capacitors or double-layered capacitors arranged on a base plate. The capacitors are affixed to metal plates on the side facing away from the base plate, whereby the plates in each instance have at least one hole. The plates are attached to one another in such a way that their holes face one another. The plates are electrically connected and mechanically attached to one another by an electrically conductive fastening bolt inserted through the holes.

### DESCRIPTION OF THE INVENTION

The object of the power capacitor for low voltage of the present invention is to solve the drawback present in the capacitors known in the art, providing a compact capacitor, with simpler and more secure assembly, permitting an automatized manufacturing.

The power capacitor for low voltage of the present invention is defined according to claim 1 and appended dependent claims of the kind comprising a plurality of capacitor elements housed inside a protection box provided with connecting terminals, at least one modular unit including a print circuit board on which an assembly of capacitor elements are electrically connected, and said power capacitor being susceptible of combining a series of modular units each provided with the same or different number of capacitor elements to reach any required total power.

Thanks to this modular distribution a more compact capacitor is obtained, with a lower size, with less quantity of used materials, electrically better protected, and environment friendly. Furthermore, it is possible to configure any power thanks to the multiple modular combinations of the capacitor elements.

Other advantages of the power capacitor of the invention are described hereinafter:
- It can be automatized practically in a 100%, so that the labour intervention is almost null, with the consequent removal of human errors.
- It enhances the thermal features, obtaining a class D climatic range, according to the current international standard IEC 60831-1/2.

- Less kinds of boxed are required, permitting the standardization.
- Perfect adaptation and quick assembly of the modular assembly inside the protection box.
- Less manufacturing time and enhancement of delivery times to the client.
- Reduction of the manufacturing cost thanks to the automatization of the assembly process, optimised use of the boxes, and decrease of references of semi-elaborated products.
- It permits an automatic final verification and an automatized register.
- It satisfies the current international standard IEC 60831-1/2.
- It is possible to carry out the maintenance and repair for each capacitor element, for each modular unit, or for the complete assembly.

Advantageously, the capacitor includes an aligned wiring, preferably formed by a group of cables, that emerges from an end to the respective terminals.

Therefore, it is obtained a considerable decrease of about 95% of the wiring with respect to that used in the capacitors known in the state of the art, and consequently it is obtain a decrease in the manufacturing costs in used materials.

Furthermore, the wiring is perfectly in order during the assembly process of the capacitor elements and during the connecting process of the terminals.

Also advantageously, the different modular units are assembled in groups of two, each group being joined to the following one forming a row, and the placement of an individual modular unit being provided when the combination of modular units is odd.

This kind of configuration permits to do different modular combinations in a quick and efficient way, and occupying a minimal space.

Preferably, each group of two modular units is mounted with their respective boards superposed to each other and with the connection faces on which the capacitor elements are connected directed opposed outwardly.

Advantageously, both superposed boards are separated by a space for the passage of the wiring.

Advantageously, the capacitor comprises clipping means for fixing both superposed boards of a group of modular units and for fixing groups of adjacent modular units. Therefore, the assembly process is facilitated.

Preferably, the boards are configured so that the capacitor elements are staggered distributed. This way, the space between said elements is optimised and between groups of boards joined in rows.

Advantageously, the protection box is prismatic, whose height is defined according to the number of groups of modular units assembled in rows. This permits to provide a series of standardized boxes.

### BRIEF DESCRIPTION OF THE DRAWINGS

To facilitate the description of what has been described previously some drawings are attached, in which, diagrammatically and only as a non-limitative example, two embodiments of the power capacitor for low voltage of the invention are shown, in which:
Fig. 1 is a perspective view of the power capacitor in a mounted position;
Fig. 2 is a perspective view of the capacitor with the protection box open showing the wiring;
Fig. 3 is a perspective view of a compact group with two modular units of nine capacitor elements each;
Fig. 4 is a side view of the modular group of Fig. 3, showing the space between the boards provided for the wiring passage;
Fig. 5 is a profile view of the modular group of Fig. 3, showing the distribution of the capacitor elements on the board; and
Fig. 6 is a profile view of a compact group of two modular units of six capacitor elements each.

### DESCRIPTION OF PREFERRED EMBODIMENTS

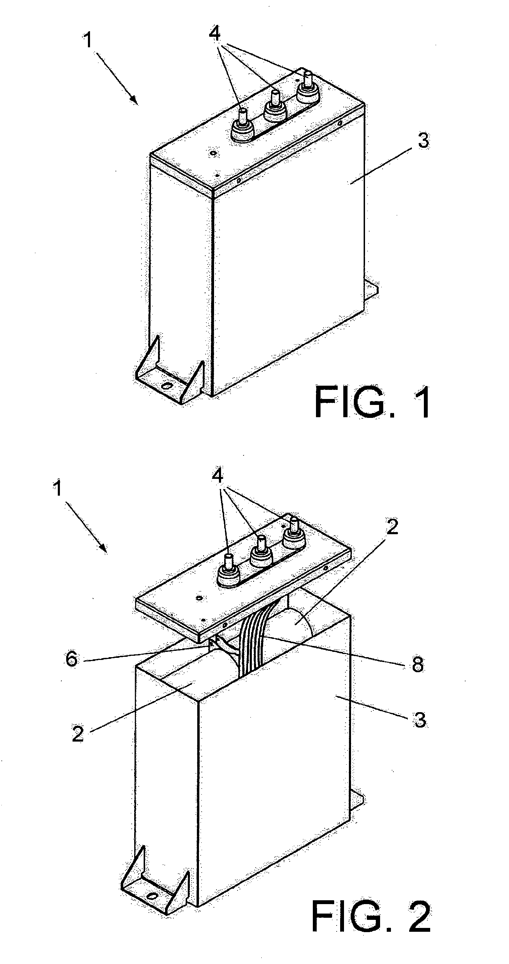

According to a first embodiment of the invention shown in Figs. 1 to 5, the power capacitor 1 for low voltage of the present invention is of the kind that comprises a plurality of capacitor elements 2 housed inside a protection box 3 provided with connecting terminals 4.

The capacitor 1 comprises at least one modular unit 5 including a printed circuit board 6 on which an assembly of capacitor elements 2 are electrically connected.

Furthermore, said capacitor 1 is susceptible of combining a series of modular units 5 provided each with the same or a different number of capacitor elements 2 to reach any required power, as explained hereinafter.

Therefore, a compact capacitor is obtained, with a simpler and more secure assembly, cheaper and that permits an automatized manufacturing.

In this first embodiment a power capacitor 1 comprising a group of two modular units 5 of nine capacitor elements 2 each is shown.

Both modular units 5 are mounted with their respective boards 6 superposed to each other and with the connection faces on which the capacitor elements 2 are connected directed opposed outwardly.

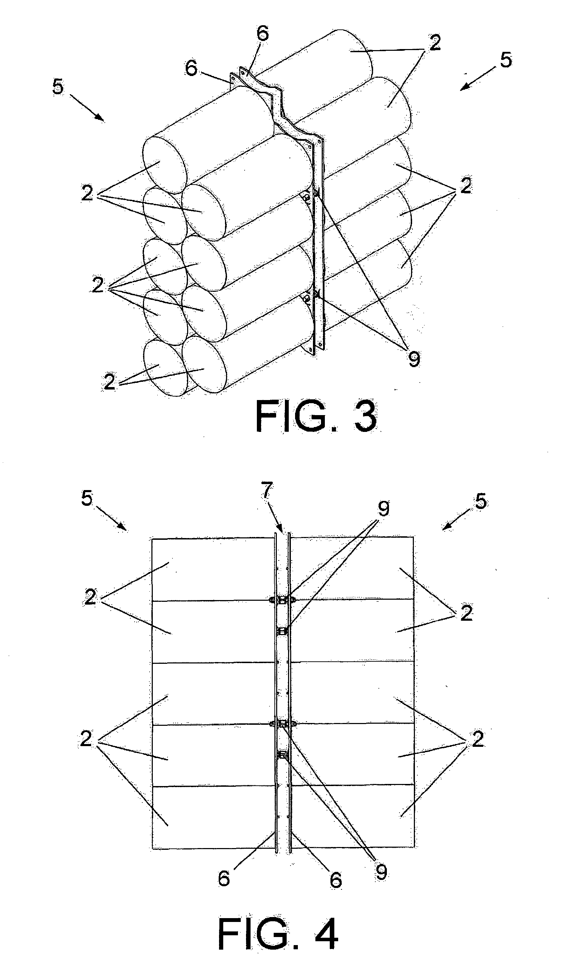

Both superposed boards 6 are separated by a space 7 for passing the wiring 8 of the capacitor elements 2 (see Figs. 2 and 4).

The wiring 8 is formed by three cables aligned and directed to the respective terminals 4. This way, a considerable decrease of about 95% of the wiring with respect to the known capacitors is obtained.

Furthermore, the capacitor 1 comprises clipping means 9 for fixing both superposed boards 6.

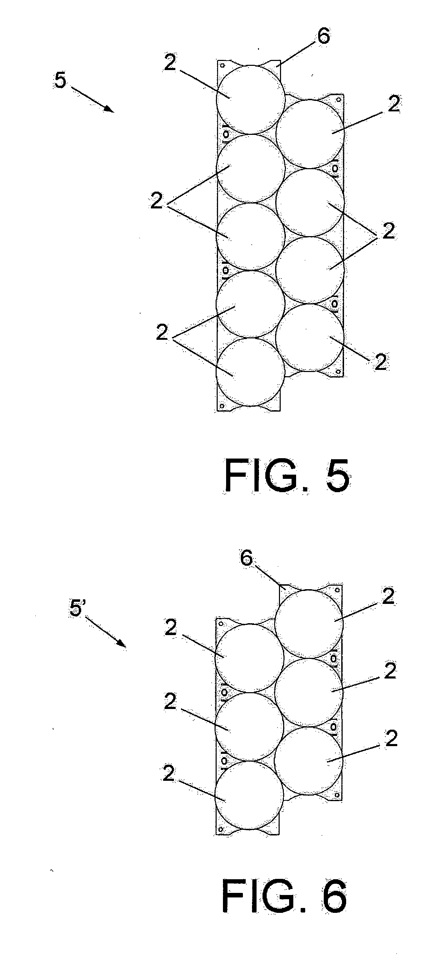

The boards 6 are configured so that the capacitor elements 2 are staggered distributed (see Fig. 5), i.e. in two parallel rows, so that the elements placed in each row are faced in the middle of the hollows of the immediate row, forming equilateral triangles. This way, the space between said elements 2 and between groups of boards 6 joined in rows is optimised.

In a second embodiment of the invention shown in Fig. 6, a power capacitor with the same constructive features than in the first embodiment is shown, but with the difference that it comprises a group formed by two modular units 5' of six capacitor elements 2 each.

Besides these two described embodiments, it is possible to obtain a greater range of powers adding groups of two modular units 5 joined to each other forming a row, the placement of one individual modular unit 5 when the combination of modular units 5 is odd is provided (not shown).

The fixation between groups of modular units 5 adjacent in rows is carried out using clipping means. This kind of configuration permits to carry out different modular combinations in a quick and efficient way, and occupying a minimal space.

Table 1 shows the multiple modular combinations that can be done to obtain any range of powers, combining in this case modular units 5 with six or nine capacitor elements 2 respectively.

**Table 1**

| Number of modular units | Combination | Total capacitor elements |
|---|---|---|
| 1 | 6 | 6 |
| 1 | 9 | 9 |
| 2 | 6+6 | 12 |
| 2 | 9+6 | 15 |
| 2 | 9+9 | 18 |
| 3 | 6+6+6 | 18 |
| 3 | 9+6+6 | 21 |
| 3 | 9+9+6 | 24 |
| 3 | 9+9+9 | 27 |
| 4 | 6+6+6+6 | 24 |
| 4 | 9+6+6+6 | 27 |
| 4 | 9+9+6+6 | 30 |
| 4 | 9+9+9+6 | 33 |
| 4 | 9+9+9+9 | 36 |
| 5 | 6+6+6+6+6 | 30 |
| 5 | 9+6+6+6+6 | 33 |
| 6 | 6+6+6+6+6+6 | 36 |

To obtain a greater precision of powers the number of capacitor elements 2 mounted in one modular unit 5 can be decreased, e.g. connecting only three capacitor elements 2 in a board 6 provided for a maximum of six elements 2.

The protection box 3 is prismatic, whose height is defined according to the number of groups of modular units 5 joined in rows. This permits to provide a series of standardized boxes.

It must be pointed out that even though modular units 5 for six or nine capacitor elements 2 are described, it is also possible to use modular units 5 with another number of elements 2, depending on the needs and applications.

## Claims

1. Power capacitor (1) for low voltage, comprising a plurality of capacitor elements (2) housed inside a protection box (3) provided with connection terminals (4), at least one modular unit (5) including a printed circuit board (6) on which an assembly of capacitor elements (2) are electrically connected, and said power capacitor (1) being susceptible of combining a series of modular units (5) each provided with the same or different number of capacitor elements (2) to reach any total required power, wherein the different modular units (5) are assembled in groups of two, each group being joined to the following one forming a row, and the placement of an individual modular unit (5) being provided when the combination of modular units (5) is odd, **characterized in that** each group of two modular units (5) is mounted with their respective boards (6) superposed to each other and with the connection faces on which the capacitor elements (2) are connected directed opposed outwardly.

2. Capacitor (1) according to claim 1, including an aligned wiring (8), preferably formed by a group of cables, that emerges from an end to the respective terminals (4).

3. Capacitor (1) according to claim 1, wherein both superposed boards (6) are separated by a space (7) for the passage of the wiring (8).

4. Capacitor (1) according to anyone of claims 1 or 3, comprising clipping means (9) for fixing both superposed boards (6) of a group of modular units (5) and for fixing groups of adjacent modular units (5).

5. Capacitor (1) according to anyone of claims 1, 3 or 4, wherein the boards (6) are configured so that the capacitor elements (2) are staggered distributed.

6. Capacitor (1) according to anyone of claims 1, 3, 4 or 5, wherein the protection box (3) is prismatic, whose height is defined according to the number of groups of modular units (5) assembled in rows.

## Patentansprüche

1. Leistungskondensator (1) für Niederspannung, der eine Mehrzahl von Kondensatorelementen (2) aufweist, die innerhalb einer Schutzdose (3) untergebracht sind, die mit Verbindungsanschlüssen (4) versehen ist, wobei zumindest eine Moduleinheit (5) eine gedruckte Schaltungsplatine (6) umfasst, auf der eine Anordnung von Kondensatorelementen (2) elektrisch verbunden ist, und wobei der Leistungskondensator (1) empfänglich für ein Kombinieren einer Serie von Moduleinheiten (5) ist, die jeweils mit der gleichen oder einer unterschiedlichen Anzahl von Kondensatorelementen (2) versehen sind, um eine beliebige erforderliche Gesamtleistung zu erreichen, wobei die unterschiedlichen Moduleinheiten (5) in Gruppen zu zwei angeordnet sind, wobei jede Gruppe mit der folgenden, eine Reihe bildend, verbunden ist und die Platzierung einer einzelnen Moduleinheit (5) vorgesehen ist, wenn die Kombination von Moduleinheiten (5) ungerade ist, **dadurch gekennzeichnet, dass** jede Gruppe zweier Moduleinheiten (5) so angebracht ist, dass ihre jeweiligen Platinen (6) einander überlagern und die Verbindungsflächen, an denen die Kondensatorelemente (2) verbunden sind, gegenüberliegend nach außen gerichtet sind.

2. Kondensator (1) gemäß Anspruch 1, der eine ausgerichtete Verdrahtung (8) umfasst, die vorzugsweise durch eine Gruppe von Kabeln gebildet ist, die von einem Ende zu den jeweiligen Anschlüssen (4) hervortritt.

3. Kondensator (1) gemäß Anspruch 1, bei dem beide überlagerte Platinen (6) durch einen Raum (7) für den Durchgang der Verdrahtung (8) getrennt sind.

4. Kondensator (1) gemäß einem der Ansprüche 1 oder 3 mit einer Halteeinrichtung (9) zum Fixieren beider überlagerter Platinen (6) einer Gruppe von Moduleinheiten (5) und zum Fixieren von Gruppen benachbarter Moduleinheiten (5).

5. Kondensator (1) gemäß einem der Ansprüche 1, 3 oder 4, bei dem die Platinen (6) so ausgebildet sind, dass die Kondensatorelemente (2) versetzt verteilt sind.

6. Kondensator (1) gemäß einem der Ansprüche 1, 3, 4 oder 5, bei dem die Schutzdose (3) prismatisch ist, wobei ihre Höhe gemäß der Anzahl von Gruppen von Moduleinheiten (5), die in Reihen angeordnet sind, definiert ist.

## Revendications

1. Condensateur de puissance (1) pour basse tension, comprenant plusieurs éléments de condensateur (2) reçus à l'intérieur d'un boîtier de protection (3) muni de bornes de connexion (4), au moins une unité modulaire (5) comprenant une carte à circuit imprimé (6) sur laquelle un ensemble d'éléments de condensateur (2) est connecté électriquement, et le condensateur de puissance (1) étant susceptible de combiner une série d'unités modulaires (5) munies chacune d'un même nombre ou d'un nombre différent d'éléments de condensateur (2) pour atteindre une puissance totale requise quelconque, dans lequel les différentes unités modulaires (5) sont assemblées en groupes de deux, chaque groupe étant relié au suivant en formant une rangée, et le positionnement d'une unité modulaire individuelle (5) étant fourni lorsque la combinaison d'unités modulaires (5) est impair, **caractérisé en ce que** chaque groupe de deux unités modulaires (5) est monté ayant leurscartes respectives(6), superposées l'une àl'autre et leurs faces de connexion sur lesquelles les éléments de condensateur (2) sont reliés étant dirigéesà l'opposé de l'extérieur.

2. Condensateur (1) selon la revendication 1, comprenant un câblage aligné (8), de préférence formé par un groupe de câbles, qui sortent à partir d'une extrémité vers les bornes respectives (4).

3. Condensateur (1) selon la revendication 1, dans lequel les deux cartes superposées (6) sont séparées par un espace (7) pour le passage du câblage (8).

4. Condensateur (1) selon l'une quelconque des revendications 1 ou3, comprenant des moyens de serrage (9) pour la fixation de deux cartes superposées (6) d'un groupe d'unités modulaires (5) et pour fixer des groupes d'unités modulaires adjacentes (5).

5. Condensateur (1) selon l'une quelconque des revendications 1, 3, ou 4, dans lequel les cartes (6) sont configurées de telle sorte que les éléments de condensateur (2) sont répartis de manière décalée.

6. Condensateur (1) selon l'une quelconque des revendications 1, 3, 4 ou 5, dans lequel le boîtier de protection (3) est prismatique, la hauteur étant définie en fonction du nombre de groupes d'unités modulaires (5) assemblés en rangées.
